# EUROPÄISCHE PATENTSCHRIFT

(11) **EP 0 878 352 B1**
(45) Veröffentlichungstag und Bekanntmachung des Hinweises auf die Patenterteilung: **02.05.2003**
(21) Anmeldenummer: 98108606.9
(22) Anmeldetag: 12.05.1998
(51) Int. Cl.: B60P 7/13

(54) **Verriegelung für Container an einem Fahrzeugchassis**
Latching device for a container on a vehicle frame
Dispositif de verrouillage pour un conteneur sur le châssis d'un véhicule

(30) Priorität: 14.05.1997 DE 19720238
(43) Veröffentlichungstag der Anmeldung: 18.11.1998
(73) Patentinhaber: Milkereit, Hans-Eckart, 23816 Bebensee (DE); Sanne, Dieter, 23816 Neversdorf (DE)
(72) Erfinder: Schulz, Frank P., 31737 Rinteln (DE); Milkereit, Hans-Eckart, 23816 Bebensee (DE)
(74) Vertreter: Eisenführ, Speiser & Partner

(56) Entgegenhaltungen:
- EP-A- 0 545 019
- DE-A- 19 606 263
- US-A- 3 872 555
- US-A- 4 023 504
- US-A- 4 352 517
- US-A- 4 352 613

## Beschreibung

Die Erfindung betrifft eine Verriegelung für Container an einem Fahrzeugchassis, insbesondere an einem Gooseneck-Chassis mit einem Gehäuse, einem im Gehäuse verschiebbar gelagerten Steckzapfen und einem im Gehäuse drehbar gelagerten Drehzapfen.

Fahrzeugchassis zur Aufnahme von 40-Fuß und 20-Fuß langen Containern werden mehr und mehr als sogenannte Gooseneck-Chassis ausgebildet. Diese weisen einen tiefergelegten hinteren Abschnitt und einen höhergelegten vorderen Abschnitt auf. Zur Aufnahme von Containern mit oder ohne Gooseneck-Tunnel sind am vorderen Ende des vorderen Abschnitts spezielle und beispielsweise aus dem deutschen Gebrauchsmuster G 91 14 903.7 bekannte Verriegelungen beidseitig angeordnet. Diese weisen einen in horizontaler Ebene verschiebbaren Steckzapfen zur Sicherung eines Containers mit Gooseneck-Tunnel sowie einen um eine vertikale Achse verdrehbaren Drehzapfen zur Sicherung eines Containers anderer Bauart auf. Die beiden unterschiedlichen Verriegelungsmechanismen sind im selben Gehäuse je einer Verriegelung gehalten und werden gesondert betätigt. Hierzu müssen Bedienungsorgane aus dem Gehäuse herausgeführt werden. Die bedienende Person muß genau wissen, bei welchem Containertyp das entsprechende Bedienungsorgan in welcher Stellung zu stehen hat. Das bekannte Gehäuse ist aufgrund der vielen Durchbrüche des Gehäuses schmutzanfällig. Fehlbedienungen sind wegen der verschiedenen Einstellmöglichkeiten leicht möglich.

Aufgabe der vorliegenden Erfindung ist es, eine Verriegelung der eingangs genannten Art zu schaffen, die einfach bedienbar und möglichst geschützt angeordnet ist. Zur Lösung dieser Aufgabe ist die erfindungsgemäße Verriegelung dadurch gekennzeichnet, daß Steckzapfen und Drehzapfen betrieblich miteinander gekoppelt sind, derart, daß bei Betätigung des Drehzapfens auch der Steckzapfen verschoben wird und/oder daß bei Betätigung des Steckzapfens der Drehzapfen gedreht wird.

Die beschriebene Kopplung von Steckzapfen und Drehzapfen ermöglicht es, für beide Funktionen ein gemeinsames Bedienungsorgan vorzusehen. Bei zwangsweiser Kopplung von Drehzapfen und Steckzapfen ist überhaupt nur noch ein Bedienungsorgan erforderlich. So kann an einem aus dem Gehäuse herausgeführten Ende des Drehzapfens ein quer zur Drehachse angeordneter Hebel vorgesehen sein. Das Gehäuse weist dann maximal drei Durchbrüche auf, nämlich für beide Enden des Drehzapfens und für ein Ende des Steckzapfens. Das Gehäuse kann im übrigen geschlossen ausgebildet sein. Verschmutzungen und Korrosionen der einzelnen Teile werden so wirksam verhindert.

Zur getrieblichen Verbindung zwischen Steckzapfen und Drehzapfen weist vorteilhafterweise der Drehzapfen eine Verzahnung auf, insbesondere ein Zahnradsegment über etwa 80° bis 140°. Analog dazu ist der Steckzapfen bzw. eine im Gehäuse angeordnete Verlängerung desselben mit einer Verzahnung versehen, insbesondere nach Art einer Zahnstange oder Triebstockverzahnung. Die beiden genannten Verzahnungen von Drehzapfen und Steckzapfen greifen ineinander und bewirken so eine zwangsweise Kopplung der Funktionen.

Üblicherweise schneidet eine Fortsetzung der Achse des Steckzapfens die Achse des Drehzapfens. Damit dies auch in der erfindungsgemäßen Verriegelung möglich ist, ist eine Verlängerung des Steckzapfens gegenüber diesem in seitlicher Richtung abgekröpft, so daß die Verlängerung seitlich neben dem Drehzapfen verläuft. Vorteilhafterweise ist die Verlängerung an einer Seitenwand des Gehäuses geführt, gelagert oder verschiebbar gehalten.

Nach einer besonders bevorzugten Ausführungsform ist am unteren, aus dem Gehäuse herausgeführten Ende des Drehzapfens ein quer zu dessen Drehachse angeordneter Hebel vorgesehen, der insbesondere gegenüber einer Unterseite des Gehäuses gekröpft ausgebildet ist. Dadurch kann der Drehzapfen kurz ausgebildet sein und trotzdem kann zwischen dem Hebel und der Unterseite des Gehäuses ein ausreichender und für die Handhabung des Hebels ergonomisch sinnvoller Abstand gegeben sein.

Ein anderer und unabhängiger Aspekt der Erfindung betrifft die Gestaltung des Gehäuses. Dieses ist für den wahlweisen Anbau linksseitig oder rechtsseitig am Fahrzeugchassis weitgehend symmetrisch aufgebaut, mit Oberwand, Unterwand, Seitenwänden und kleinen Stirnwänden, mit einer Öffnung in der Oberwand und vorzugsweise auch in der Unterwand zur Aufnahme des Drehzapfens und Öffnungen in den Stirnwänden zur insbesondere wahlweisen Herausführung des Steckzapfens.

Üblicherweise ragt der Steckzapfen nur mit einem Ende aus dem Gehäuse heraus. Gleichwohl weisen vorzugsweise beide Stirnseiten des Gehäuses Öffnungen auf, die durch entsprechende Deckel oder Abdeckungen verschließbar sind. Durch eine einfache Änderung der Anordnung des Steckzapfens innerhalb des Gehäuses kann die Verriegelung wahlweise für einen linksseitigen oder rechtsseitigen Anbau vorbereitet werden.

Eine nicht genutzte Öffnung im Bereich der Stirnwand kann in jeglicher Ausführung der Verriegelung zur Aufnahme einer Begrenzungsleuchte oder eines hierfür vorbereiteten Bauteils vorgesehen sein. Gesonderte Halterungen für derartige Leuchten entfallen dann.

Ein weiterer Aspekt der Erfindung sieht Dichtmittel im Bereich der Öffnungen für Steckzapfen und/oder Drehzapfen vor, insbesondere Dichtringe und/oder Gleitbuchsen. Die Abdichtung des im übrigen geschlossenen Gehäuses ist damit nahezu vollkommen. Ein Eindringen von Staub und Schmutz ist dann nicht mehr möglich.

Schließlich betrifft ein unabhängiger Aspekt der Erfindung eine Verriegelung mit einem Steckzapfen und/oder einem Drehzapfen und mit einem neuen Antrieb. So ist vorgesehen, daß am oder im Gehäuse mindestens eine pneumatisch oder hydraulisch wirkende Kolben-Zylinder-Einheit zur Betätigung des Steckzapfens und/oder des Drehzapfens angeordnet ist. Auf diese Weise ist eine Fernbedienung der Verriegelung möglich. Gerade im geschwindigkeitsorientierten Be- und Entladevorgang von Containern ist dies von Vorteil. Vorzugsweise ist dem Drehzapfen ein Hebelgetriebe zugeordnet, das von der Kolben-Zylinder-Einheit zum Drehen des Drehzapfens beaufschlagbar ist. Möglich ist dabei auch die Ausführung einer Verriegelung mit nur einem Verriegelungsorgan, das heißt mit Steckzapfen oder Drehzapfen.

Weitere Merkmale der Erfindung ergeben sich aus den Ansprüchen und aus der Beschreibung im übrigen.

Ausführungsbeispiele werden nachfolgend anhand von Zeichnungen näher erläutert. Es zeigen:
- Fig. 1: eine Verriegelung in Betätigungsstellung, mit abgenommener Seitenwand und in Seitenansicht,
- Fig. 2: die Verriegelung in Stirnansicht, das heißt in einer Ansicht entlang der Linie II-II in Fig. 1,
- Fig. 3: einen Längsschnitt durch die Verriegelung entlang der Linie III-III in Fig. 1,
- Fig. 4: eine Ansicht der Verriegelung analog Fig. 1, jedoch nicht in Betätigungsstellung, sondern mit eingefahrenem Steckzapfen und einem Drehzapfen in Aufnahmestellung,
- Fig. 5: eine Stirnansicht der Verriegelung gemäß Fig. 4 entlang der Linie V-V (der in Fig. 2 gezeigten Stirnseite gegenüberliegend),
- Fig. 6: einen Längsschnitt durch die Verriegelung gemäß Fig. 4 entlang der Linie VI-VI, analog der Darstellung in Fig. 3,
- Fig. 7: ein auf einem Drehzapfen zu befestigendes Zahnradsegment in axialer Draufsicht,
- Fig. 8: das Zahnradsegment gemäß Fig. 7 in Seitenansicht,
- Fig. 9: einen Steckzapfen mit Verlängerung und Triebstockverzahnung in der Draufsicht, entsprechend den Ansichten in Fig. 6 und 3,
- Fig. 10: den Steckzapfen gemäß Fig. 9 in Seitenansicht,
- Fig. 11: den Steckzapfen gemäß Fig. 9 entlang der Linien XI-XI in Stirnansicht,
- Fig. 12: einen Längsschnitt analog Fig. 6, jedoch mit einem zusätzlichen pneumatischen Antrieb der Verriegelung,
- Fig. 13: eine alternative Ausführungsform zu Fig. 12.

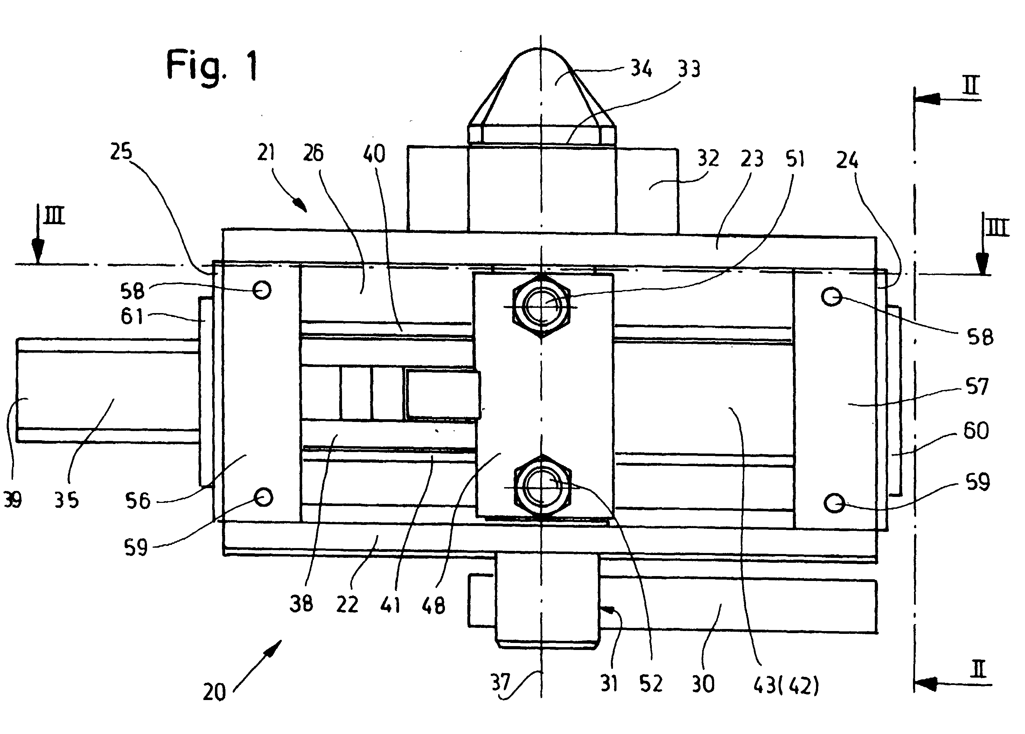

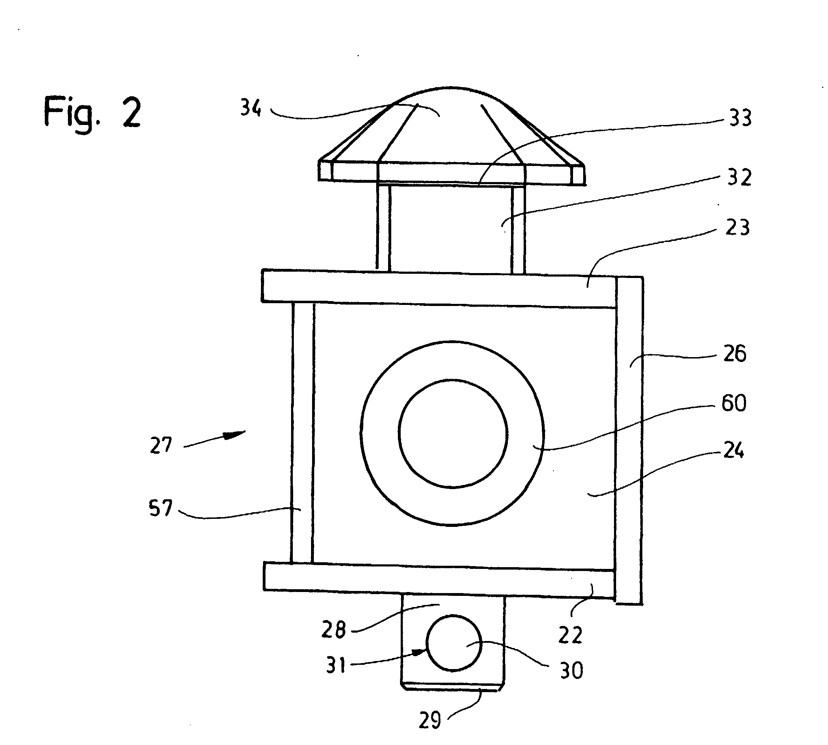

Es wird zunächst bezug genommen auf Fig. 1. Erkennbar ist dort eine Verriegelung 20 zur Fixierung eines Containers auf einem Fahrzeugchassis. Die Verriegelung weist ein Gehäuse 21 mit einer Bodenwand 22, einer Oberwand 23, einer vorderen Stirnwand 24, einer hinteren Stirnwand 25, einer Seitenwand 26 und einer in den Figuren nicht sichtbaren, weil abgenommenen Seitenwand an der der Seitenwand 26 gegenüberliegenden Seite 27 auf, siehe Fig. 2.

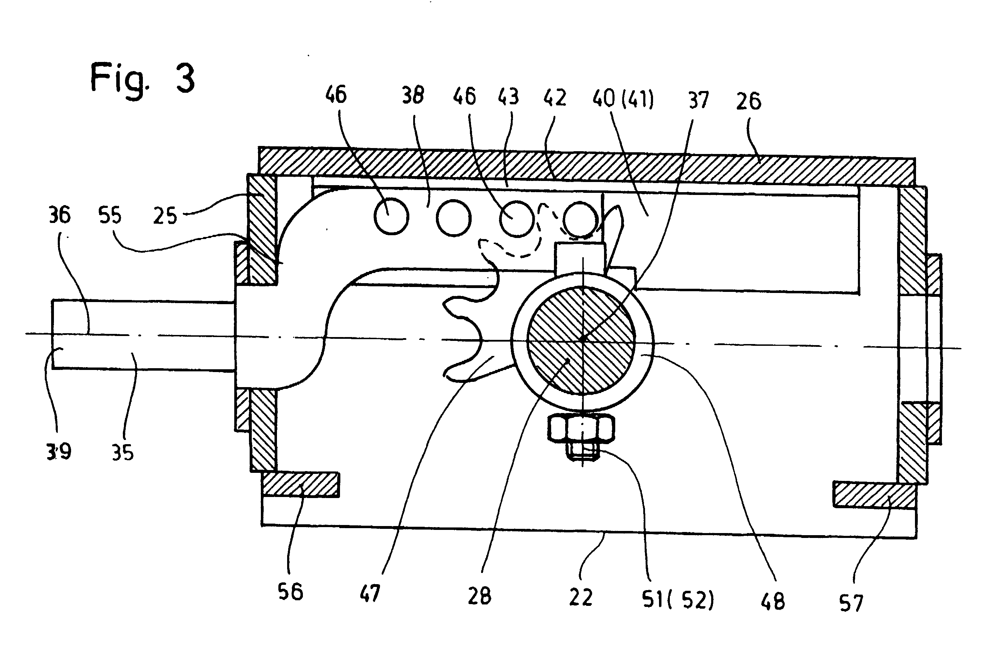

Im Inneren des Gehäuses 21 ist ein vertikal gerichteter Drehzapfen 28 angeordnet bzw. gelagert, siehe insbesondere Fig. 3. Ein unteres Ende 29 des Drehzapfens 28 tritt aus der Bodenwand 22 nach unten heraus und dient der Aufnahme eines queraxial gerichteten Hebels 30 zur Betätigung des Drehzapfens 28. Hierzu ist der Hebel 30 in einer quergerichteten Bohrung 31 des Drehzapfens 28 insbesondere verschiebbar gehalten.

Auf der Oberwand 23 ist ein Kragen 32 angeordnet. Dieser dient zur Aufnahme eines oberen Endes 33 des Drehzapfens 28. An das obere Ende 33 schließt ein Verriegelungskopf 34 an. Dieser greift von unten in einen Containereckbeschlag und sichert den Container durch Verdrehen um 90°. Die Fig. 1 bis 3 zeigen die Verriegelungsstellung des Drehzapfens 28. Die beschriebene Funktion des Drehzapfens 28 sowie das Zusammenwirken zwischen Verriegelungskopf 34, Kragen 32 und Containereckbeschlag sind bekannt und müssen nicht näher erläutert werden.

Im Gehäuse 21 ist weiterhin ein Steckzapfen 35 gelagert. Dieser dient typischerweise zur Sicherung eines Containers mit einem sogenannten Gooseneck-Tunnel auf einem Gooseneck-Chassis und zwar an einem hierfür vorgesehenen Containereckbeschlag an der Containerstirnseite. Nach dem Absetzen des Containers auf dem Gooseneck-Chassis liegt der Eckbeschlag genau vor der Verriegelung 20, so daß der Steckzapfen 35 in den Eckbeschlag eingeschoben werden kann. Dadurch wird der Container gegen Vertikalbewegungen gesichert. Dies ist insbesondere beim Transport leerer Container erforderlich. Auch die Funktion des Steckzapfens ist für sich bekannt.

Der Steckzapfen 35 ist im Gehäuse 21 verschiebbar gehalten. Üblicherweise schneidet eine Fortsetzung der Mittelachse 36 des Steckzapfens 35 die Drehachse 37 des Drehzapfens 28, siehe Fig. 3. Entsprechend ist der Bewegungsspielraum des Steckzapfens 35 innerhalb des Gehäuses 21 eingeschränkt. Der Steckzapfen 35 ist deshalb mit einer im Gehäuse 21 verlaufenden Verlängerung 38 versehen, die gegenüber dem aus dem Gehäuse 21 austretenden Ende 39 des Steckzapfens 35 in Richtung auf eine der Seitenwandungen, im vorliegenden Fall in Richtung auf die Seitenwand 26, abgekröpft ist, aber parallel zum Ende 39 verläuft.

Der Steckzapfen 35 ist im Bereich der Verlängerung 38 an der Seitenwand 26 in einem U-Profil geführt. Dieses besteht aus zwei mit Abstand zueinander angeordneten Schenkeln 40, 41 und einem entsprechenden Bereich 42 der Seitenwand 26 zwischen den Schenkeln 40, 41. Im Inneren des Gehäuses 21 ist auf den Wandbereich 42 eine Gleitplatte 43 aus gleitfähigem Kunststoff oder mit einer verzinkten Oberfläche aufgebracht. Vorteilhaft ist in diesem Bereich die Herabsetzung der Gleit- und Haftreibung.

Die Verlängerung 38 weist zwei übereinanderliegende Stege 44, 45 auf, die durch mehrere, im vorliegenden Falle durch vier Rundstäbe 46 miteinander verbunden sind. Letztere erstrecken sich in Richtung parallel zur Drehachse 37 und sind mit Abstand aufeinanderfolgend unter Bildung einer Triebstockverzahnung zwischen den Stegen 44, 45 gehalten. Die Rundstäbe 46 liegen somit in einer Reihe parallel zur Mittelachse 36.

Zwischen dem Steckzapfen 35 und dem Drehzapfen 28 besteht eine getriebliche Verbindung, in diesem Fall gebildet durch die beschriebene Triebstockverzahnung der Verlängerung 38 und ein am Drehzapfen 28 angeordnetes Zahnradsegment 47, das sich über einen Teilkreis von etwa 125° erstreckt. Die getriebliche Verbindung ist derart, daß bei einer 90°-Drehung des Drehzapfens 28 zugleich die gewünschte Schubbewegung des Steckzapfens 35 erfolgt.

Das Zahnradsegment 47 ist an einer Hülse 48 angeordnet, insbesondere angeschweißt, die auf den Drehzapfen 28 aufgeschoben und über durchgehende Bohrungen 49, 50 und entsprechende Bolzen 51, 52 auf dem Drehzapfen 28 gesichert sind.

Die Hülse 48 erstreckt sich nahezu über die gesamte innere Höhe des Gehäuses 21, so daß der Drehzapfen 28 durch die Fixierung der Hülse 48 auf dem Drehzapfen im Gehäuse 21 positioniert ist.

In einer nicht gezeigten Ausführungsform ist die Verzahnung des Drehzapfens 28 Teil desselben und steht in radialer Richtung nicht über den Umfang des Drehzapfens hinaus. Die Verlängerung 38 weist dann eine hierzu passende Zahnstange auf.

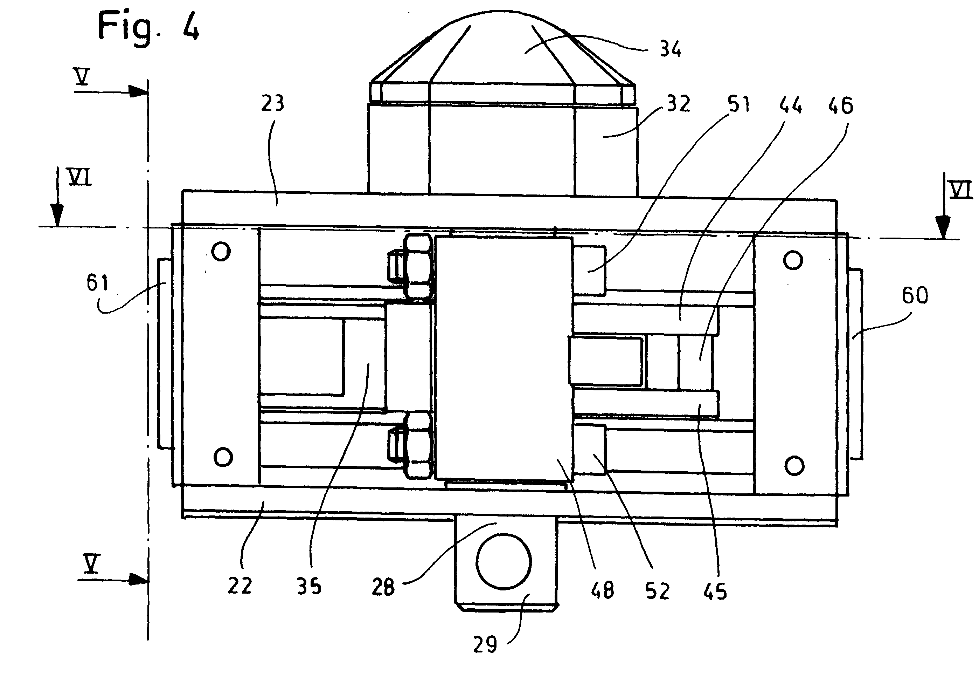

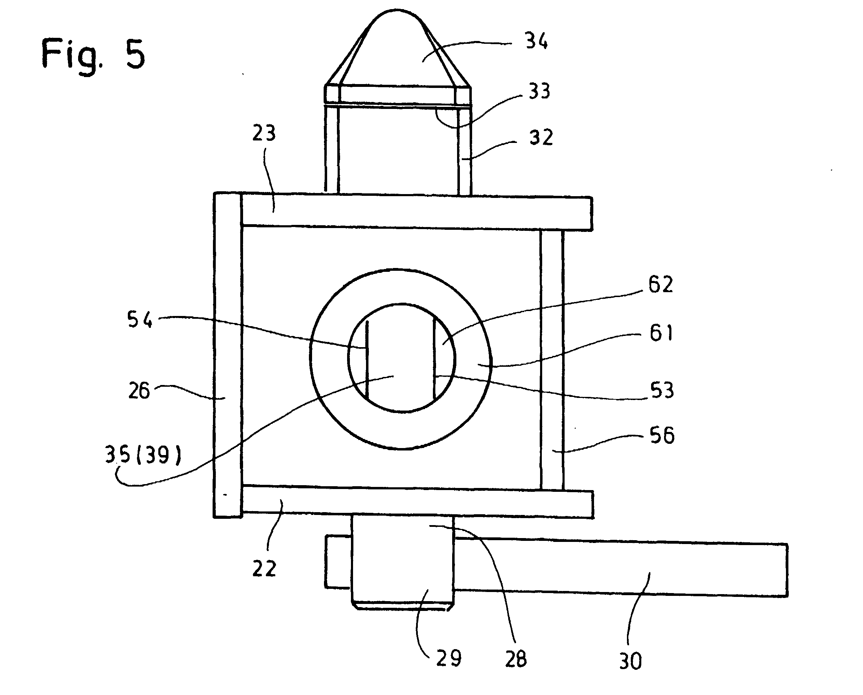

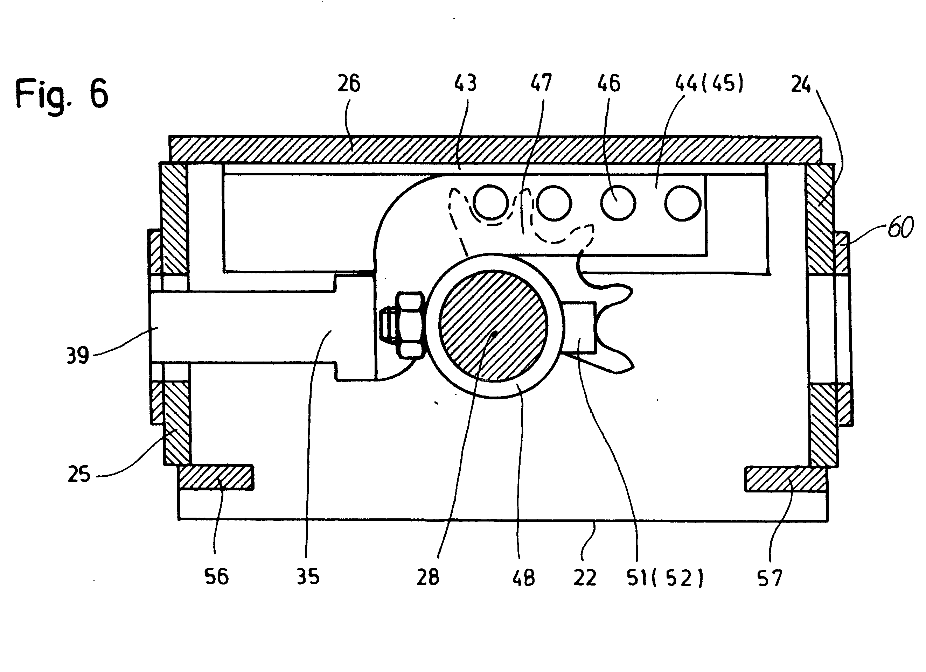

Die Fig. 4 bis 6 zeigen Drehzapfen 28 und Steckzapfen 35 in eingefahrener Position bzw. in einer Wartestellung für die Aufnahme des jeweiligen Containers. Der Steckzapfen 35 ist vollständig in das Gehäuse 21 eingeschoben. Der ovale Verriegelungskopf 34 schließt bündig mit dem Kragen 32 ab, siehe insbesondere Fig. 4 und 5. Die Abmessung des Steckzapfens 35 einschließlich der Verlängerung 38 ist relativ zur Länge des Gehäuses 21 so bemessen, daß der Steckzapfen 35 insgesamt über die Seite 27 in das Gehäuse 21 eingesetzt werden kann. Danach wird die Hülse 48 mit dem Zahnradsegment 47 im Bereich der Drehachse 37 bereitgehalten und der Drehzapfen 28 von oben in das Gehäuse eingeführt bis zum Austritt des unteren Endes 29. Der Hebel 30 kann analog der Hülse 48 über eine entsprechende Hülse in das Ende 29 eingesetzt sein (nicht gezeigt). Weitere Befestigungsarten sind denkbar.

Das aus dem Gehäuse 21 heraustretende Ende 39 des Steckzapfens 35 weist einen runden Querschnitt mit beidseitigen Abflachungen 53, 54 auf. Die Bewegung des Steckzapfens 35 aus dem Gehäuse 21 heraus wird vorzugsweise begrenzt durch Anlage eines im Bereich der Kröpfung liegenden Winkelstücks 55 an der hinteren Stirnwand 25.

Im Bereich der Seite 27 ist eine nicht näher gezeigte abnehmbare Seitenwand vorgesehen. Diese wird gehalten von schmalen, benachbart zu den Stirnwänden 24, 25 und quer zu diesen eingesetzten Wandstegen 56, 57. Beide Wandstege weisen jeweils zwei Bohrungen 58, 59 auf, die zur Verschraubung der nicht gezeigten Seitenwand mit einem Gewinde versehen sein können.

Die Stirnwände 24, 25 sind in besonderer Weise aufgebaut. So sind diese entweder mit einem geschlossenen Deckel 60 (Stirnwand 24) versehen oder weisen einen Deckel 61 mit Durchgangsbohrung 62 zum Durchtritt des Steckzapfens 35 auf (Stirnwand 25). Anstelle eines Deckels kann in die Stirnwand auch eine nicht gezeigte Begrenzungsleuchte oder eine Aufnahme hierfür eingesetzt sein.

Insgesamt ist das Gehäuse 21 vollständig abgeschlossen. Schmutz oder Staub können nicht eindringen. Zur Erzielung einer noch besseren Abdichtung können die vorhandenen Durchbrüche mit Dichtmitteln gesichert sein, insbesondere im Bereich des Durchtritts des Drehzapfens 28 durch Oberwand 23 und/oder Bodenwand 22.

Die gezeigte Verriegelung 20 ist vorgesehen für die Montage vorne rechts an der Quertraverse eines Fahrzeugchassis. Die Seitenwand 26 ist vorzugsweise seitlich an der nicht gezeigten Quertraverse angeschweißt. Die Quertraverse selbst kann einen geschlossenen Querschnitt aufweisen. Ausnehmungen für Bedienungselemente der Verriegelung sind nicht erforderlich. Entsprechend behält die Quertraverse nach der Montage der Verriegelung 20 die erforderliche hohe Stabilität.

Das Gehäuse 21 ist insgesamt symmetrisch aufgebaut. Durch vertauschten Einbau der Deckel 60, 61 und entsprechend anderen Einbau des Steckzapfens 35 kann die Verriegelung 20 auch für den Einbau an der linken Seite des Fahrzeugchassis vorbereitet werden. Die abnehmbare Seitenwand an der Seite 27 liegt dann wiederum seitlich außen am Fahrzeugchassis.

Die beschriebene getriebliche Verbindung zwischen Drehzapfen 28 und Steckzapfen 35 ermöglicht eine einfache und fehlbedienungsfreie Betätigung der Verriegelung. Bei Drehen des Hebels 30 werden zwangsweise beide Verriegelungsorgane (beide Zapfen 28, 35) betätigt. Irgendwelche Überlegungen hinsichtlich einer Zuordnung zwischen Verriegelungsorgan einerseits und Betätigungsorgan andererseits sind nicht erforderlich. Die Arbeitssicherheit wird dadurch wesentlich gesteigert.

In einer weiteren Ausführungsform ist im oder am Gehäuse 21 eine Kolben-Zylinder-Einheit zur Betätigung des Drehzapfens 28 angeordnet. Vorzugsweise ist dann eine ebenfalls Hebelanordnung zur Verbindung zwischen dem Drehzapfen 28 und der Kolben-Zylinder-Einheit vorgesehen. Die Kolben-Zylinder-Einheit kann doppelt wirkend oder mit zwei Kolben-Zylinder-Anordnungen aufgebaut sein. Möglich ist auch eine einfach wirkende Ausführung mit Rückstellung durch Federwirkung. Die einen Container transportierenden Fahrzeuge verfügen ohnehin über eine Druckluftanlage. Mit dieser kann auf einfache Weise ein pneumatisches Stellglied angesteuert und betätigt werden. So kann ein Druckluftanschluß am Gehäuse 21 vorgesehen sein, während die Kolben-Zylinder-Einheit innerhalb des Gehäuses angeordnet ist. Eine Verschmutzung wird dadurch wiederum ausgeschlossen, während eine Fernbedienung vom Fahrerhaus aus möglich ist.

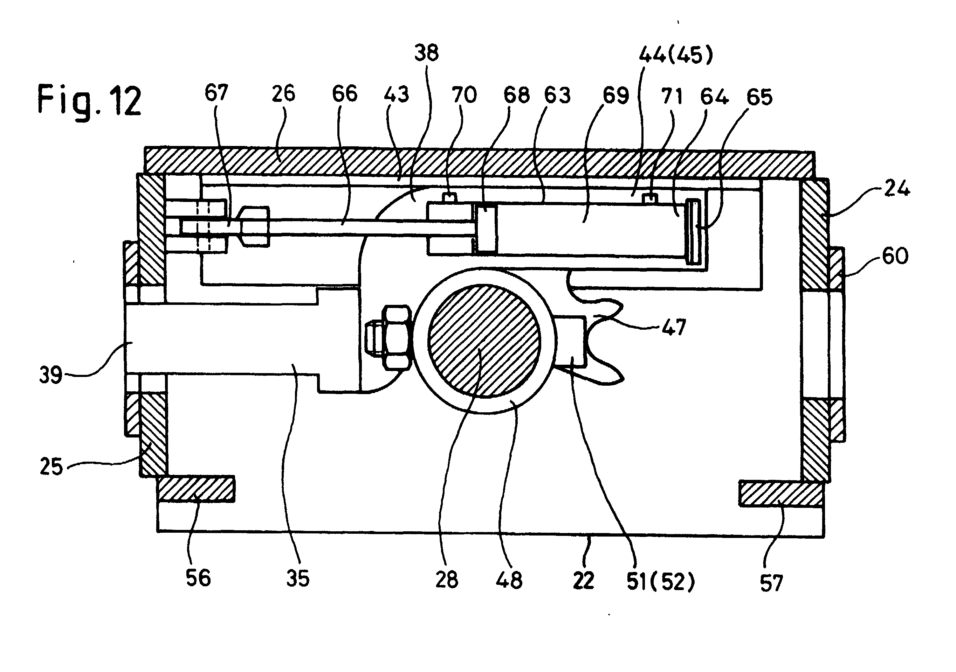

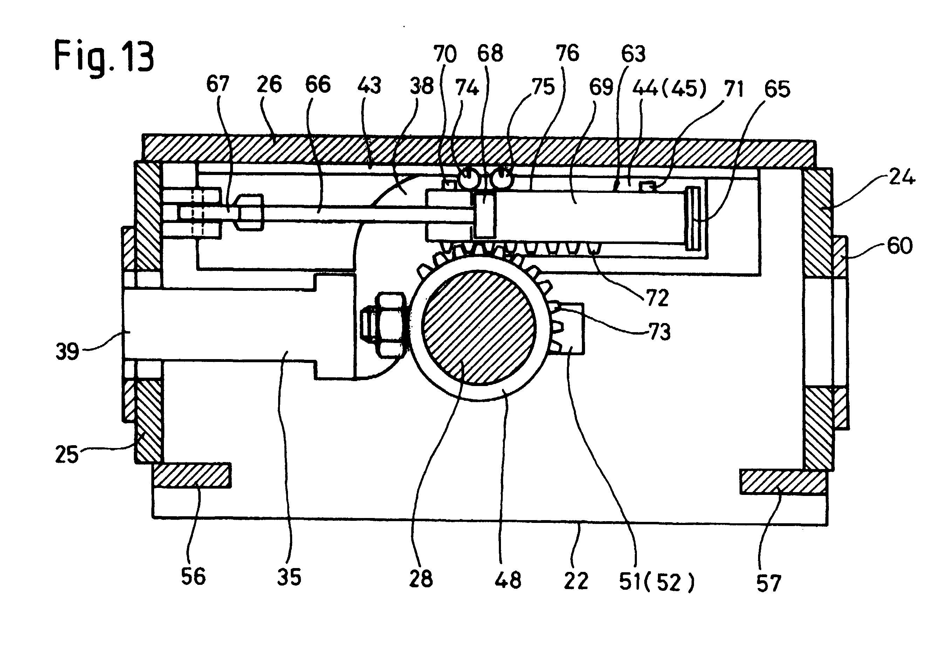

Konkrete Ausformungen des Gedankens der pneumatischen Verstellung zeigen die Fig. 12 und 13. Gemäß Fig. 12 ist ein doppelt wirkender Zylinder 63 oberhalb der Verlängerung 38 des Steckzapfens 35 angeordnet. Ein freies Ende 64 des Zylinders 63 ist über einen Lagerbock 65 mit der Verlängerung 38 (nahe dem freien Ende derselben) verbunden.

Eine Kolbenstange 66 tritt einseitig aus dem Zylinder 63 aus und ist über einen Gelenkkopf mit dem Gehäuse, nämlich hier mit der hinteren Stirnwand 25 verbunden. Die Bewegung eines Kolbens 68 im Hubraum 69 wird gesteuert über Luftanschlüsse 70, 71. Die Druckluftzufuhr zu den Anschlüssen 70, 71 und die Weiterführung der Luft innerhalb des Zylinders 63 ist nicht näher dargestellt. Beispielsweise können an die Anschlüsse 70, 71 flexible Druckluftleitungen angeschlossen sein, die wiederum über entsprechende feste Anschlüsse in Gehäusewandungen aus dem Gehäuse herausgeführt sind.

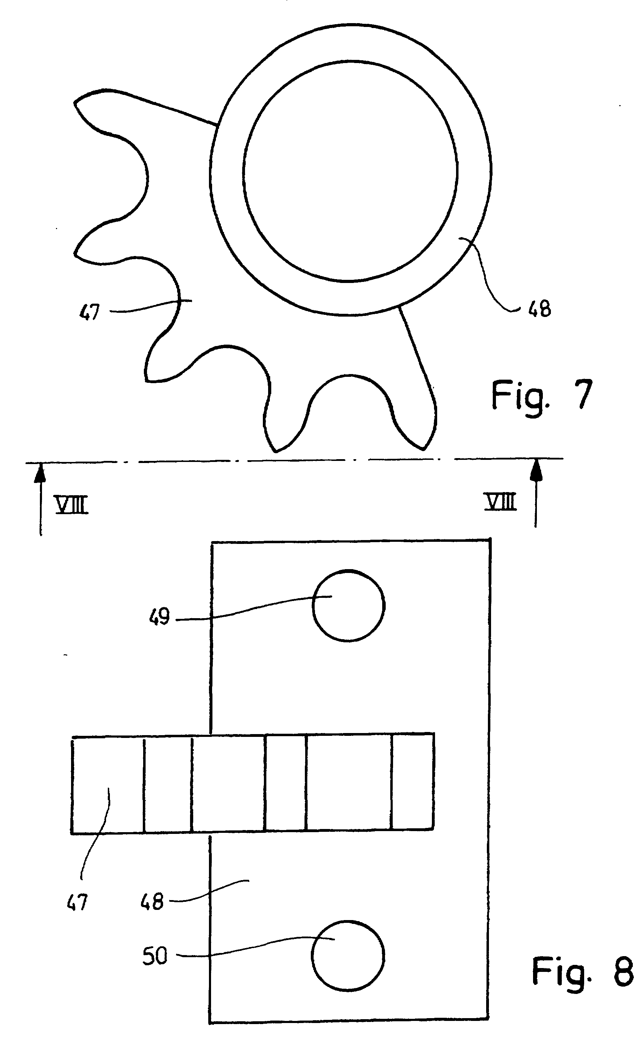

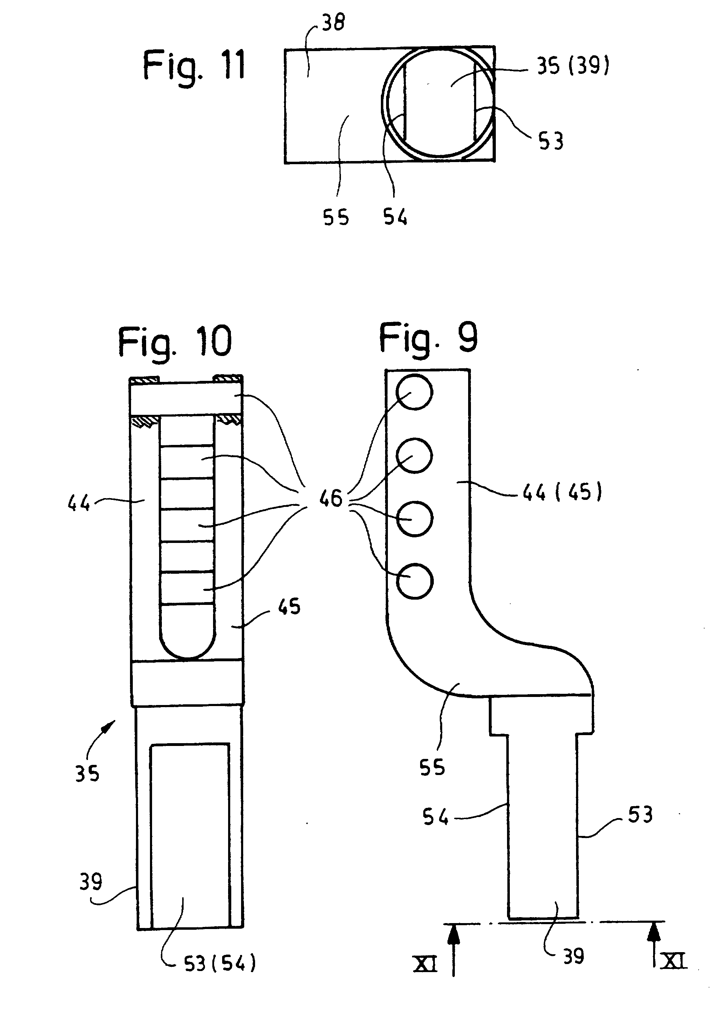

Die getriebliche Kopplung zwischen dem Steckzapfen 35 und dem Drehzapfen 28 ist die selbe wie zuvor anhand der Fig. 1 bis 11 beschrieben, nämlich über eine Verzahnung, siehe Zahnradsegment 47. Bei Ansteuerung des auf Seiten der Kolbenstange 66 liegenden Luftanschlusses 70 wird der Zylinder 63 relativ zum Kolben 68 in Richtung auf die Kolbenstange 66 verschoben. Der über den Lagerbock (und die Verlängerung 38) mit dem Zylinder 63 verbundene Steckzapfen 35 führt die Bewegung des Zylinders zwangsläufig mit aus und fährt aus der in Fig. 12 gezeigten Stellung nach links in eine Verriegelungsstellung. Der Drehzapfen wird über die getriebliche Kopplung entsprechend mitbewegt. Zum Entriegeln ist in entsprechend umgekehrter Weise der Luftanschluß 71 zu beaufschlagen und der Anschluß 70 zu entlüften.

Naturgemäß können Zylinder 63 und Kolbenstange 66 auch vertauscht sein, so daß der Zylinder 63 mit der Stirnwand 25 und die Kolbenstange über einen Lagerbock mit einem Teil des Steckzapfens verbunden sind.

Fig. 13 zeigt eine Variante der pneumatischen Betätigung. Zylinder 63 und Kolbenstange 66 sind wiederum mit dem Steckzapfen 35 und dem Gehäuse verbunden, so daß durch Ansteuerung des Zylinders 63 eine Bewegung des Steckzapfens 35 ausgelöst werden kann. Ein umgekehrter Einbau von Zylinder 63 und Kolbenstange 66 ist, wie zuvor schon anhand der Fig. 12 erläutert, möglich.

Zusätzlich besteht eine getriebliche Kopplung (anstelle der getrieblichen Kopplung in Fig. 12) zwischen der Anordnung aus Kolbenstange 66, Kolben 68, Zylinder 63 auf der einen Seite und dem Drehzapfen 28 auf der anderen Seite. Im vorliegenden Fall weist der Zylinder 63 eine dem Drehzapfen 28 zugewandte Außenverzahnung 72 nach Art einer Zahnstange auf. Korrespondierend hierzu ist die fest mit dem Drehzapfen 28 verbundene Hülse 48 mit einem Zahnradsegment 73 oder einem Zahnrad versehen. Bei Bewegung des Zylinders 63 wird über die Verzahnungen 72, 73 somit automatisch der Drehzapfen 28 verdreht.

Die Außenverzahnung 72 kann Teil des doppelt wirkenden Zylinders 63 oder einer den Zylinder 63 umfassenden (hier nicht gezeigten) Hülse sein.

Die gegebenenfalls auftretenden Querkräfte werden auf einer der Außenverzahnung 72 gegenüberliegenden Seite des Zylinders 63 abgefangen. Hier sind nämlich Druckrollen 74, 75 an der Seitenwand 26 drehbar gelagert. Eine Außenwand 76 des Zylinders 63 rollt bei Bewegung desselben auf den Druckrollen 74, 75 ab.

### Bezugszeichenliste:

- 20: Verriegelung
- 21: Gehäuse
- 22: Bodenwand
- 23: Oberwand
- 24: vordere Stirnwand
- 25: hintere Stirnwand
- 26: Seitenwand
- 27: Seite
- 28: Drehzapfen
- 29: unteres Ende
- 30: Hebel
- 31: Bohrung
- 32: Kragen
- 33: oberes Ende
- 34: Verriegelungskopf
- 35: Steckzapfen
- 36: Mittelachse
- 37: Drehachse
- 38: Verlängerung
- 39: Ende
- 40: Schenkel
- 41: Schenkel
- 42: Wandbereich
- 43: Gleitplatte
- 44: Steg
- 45: Steg
- 46: Rundstäbe
- 47: Zahnradsegment
- 48: Hülse
- 49: Bohrung
- 50: Bohrung
- 51: Bolzen
- 52: Bolzen
- 53: Abflachung
- 54: Abflachung
- 55: Winkel
- 56: Wandsteg
- 57: Wandsteg
- 58: Bohrung
- 59: Bohrung
- 60: Deckel
- 61: Deckel
- 62: Bohrung/Öffnung
- 63: Zylinder
- 64: freies Ende
- 65: Lagerbock
- 66: Kolbenstange
- 67: Gelenkkopf
- 68: Kolben
- 69: Hubraum
- 70: Anschluß
- 71: Anschluß
- 72: Außenverzahnung
- 73: Zahnradsegment
- 74: Druckrolle
- 75: Druckrolle
- 76: Außenwand

## Patentansprüche

1. Verriegelung für Container an einem Fahrzeugchassis, insbesondere an einem Gooseneck-Chassis, mit einem Gehäuse (21), einem im Gehäuse verschiebbar gelagerten Steckzapfen (35) und einem im Gehäuse drehbar gelagerten Drehzapfen (28), **dadurch gekennzeichnet, daß** Steckzapfen (35) und Drehzapfen (28) getrieblich miteinander gekoppelt sind, derart, daß bei Betätigung des Drehzapfens (28) auch der Steckzapfen (35) verschoben wird und/oder daß bei Betätigung des Steckzapfens (35) der Drehzapfen (28) gedreht wird.

2. Verriegelung nach Anspruch 1, **dadurch gekennzeichnet, daß** der Drehzapfen (28) eine Verzahnung aufweist, insbesondere ein Zahnradsegment (47) über etwa 80° bis 140°, daß der Steckzapfen (35) bzw. eine im Gehäuse (21) angeordnete Verlängerung (38) desselben eine Verzahnung aufweist, insbesondere nach Art einer Zahnstange oder Triebstockverzahnung (Stege 44, 45 und Rundstäbe 46), und daß die genannten Verzahnungen zur getrieblichen Kopplung von Steckzapfen (35) und Drehzapfen (28) ineinander greifen.

3. Verriegelung nach Anspruch 1 oder 2, **dadurch gekennzeichnet, daß** die Verzahnung (47) des Drehzapfens (28) Teil einer Hülse (48) ist, die auf dem Drehzapfen (28) verdrehsicher gehalten ist, oder daß die Verzahnung des Drehzapfens (28) Teil desselben ist und insbesondere in radialer Richtung nicht über den Umfang des Drehzapfens (28) hinaussteht.

4. Verriegelung nach Anspruch 2 oder 3, **dadurch gekennzeichnet, daß** die Verlängerung (38) des Steckzapfens (35) gegenüber diesem in seitlicher Richtung abgekröpft ist, derart, daß eine Fortsetzung der Achse (36) des Steckzapfens (35) etwa die Achse (37) des Drehzapfens (28) schneidet, während die Verlängerung (38) seitlich neben dem Drehzapfen (28) verläuft.

5. Verriegelung nach mindestens einem der Ansprüche 2 bis 4, **dadurch gekennzeichnet, daß** die Verlängerung (38) an einer Seitenwand (26) des Gehäuses (21) geführt ist.

6. Verriegelung nach mindestens einem der Ansprüche 2 bis 5, **dadurch gekennzeichnet, daß** die Verlängerung (38) zwischen Drehzapfen (28) und Seitenwand (26) in Längsrichtung verschiebbar gehalten ist, insbesondere in einer U-profilartigen Führung.

7. Verriegelung nach mindestens einem der Ansprüche 2 bis 6, **dadurch gekennzeichnet, daß** die Seitenwand (26) des Gehäuses (21) zwei mit Abstand zueinander angeordnete und in horizontalen, übereinanderliegenden Ebenen verlaufende Stege (Schenkel 40, 41) aufweist, zwischen denen die Verlängerung (38) mit entsprechenden Anlageflächen geführt ist.

8. Verriegelung nach mindestens einem der voranstehenden Ansprüche, **dadurch gekennzeichnet, daß** der Steckzapfen (35) bzw. dessen Verlängerung (38) seitlich, das heißt auf der dem Drehzapfen (28) abgewandten Seite gleitend und vorzugsweise mit herabgesetzter Reibung geführt ist, insbesondere an einem Kunststoffstreifen (Gleitplatte 43) oder einer verzinkten Oberfläche gleitend anliegt, der oder die vorzugsweise mit einer Seitenwand (26) des Gehäuses (21) verbunden ist und sich parallel zur Längsrichtung des Steckzapfens (35) erstreckt.

9. Verriegelung nach mindestens einem der voranstehenden Ansprüche, **dadurch gekennzeichnet, daß** der Drehzapfen (28) an einem aus dem Gehäuse (21) herausgeführten, vorzugsweise unteren Ende (29) ein Mittel zum Verdrehen aufweist, insbesondere einen quer zur Drehachse (37) angeordneten und mit dem Ende (29) verbundenen Hebel (30).

10. Verriegelung nach Anspruch 9, **dadurch gekennzeichnet, daß** der Hebel (30) zur Vergrößerung des Abstands gegenüber einer Unterseite (Bodenwand 22) des Gehäuses (21) gekröpft ausgebildet ist.

11. Verriegelung nach mindestens einem der voranstehenden Ansprüche, **dadurch gekennzeichnet, daß** das Gehäuse (21) allseits geschlossen ist und lediglich Öffnungen für den Austritt des Steckzapfens (35), des Drehzapfens (28) und insbesondere eines unteren Endes (29) des Drehzapfens aufweist.

12. Verriegelung nach einem oder mehreren der voranstehenden Ansprüche, **dadurch gekennzeichnet, daß** das Gehäuse (21) für den wahlweisen Anbau linksseitig oder rechtsseitig am Fahrzeugchassis weitgehend symmetrisch aufgebaut ist, mit Oberwand (23), Bodenwand (22), Seitenwänden (26) und kleinen Stirnwänden (24, 25), mit einer Öffnung in der Oberwand (23) und vorzugsweise auch in der Bodenwand (22) zur Aufnahme des Drehzapfens (28) und Öffnungen in den Stirnwänden (24, 25) zur insbesondere wahlweisen Herausführung des Steckzapfens (35).

13. Verriegelung nach Anspruch 12, **dadurch gekennzeichnet, daß** eine der beiden Öffnungen in den Stirnwänden (24, 25) durch einen Deckel (60) dicht verschlossen ist.

14. Verriegelung nach mindestens einem der voranstehenden Ansprüche, **dadurch gekennzeichnet, daß** eine der Seitenwände des Gehäuses (21) zu Wartungszwecken und/oder zum Einbau der einzelnen Bestandteile der Verriegelung lösbar ist.

15. Verriegelung nach mindestens einem der voranstehenden Ansprüche, **dadurch gekennzeichnet, daß** auf der Oberwand (23) - Bereich der Öffnung für den Drehzapfen (28) - ein Kragen (32) zur Führung und Aufnahme eines Containereckbeschlages fest angeordnet ist.

16. Verriegelung nach mindestens einem der voranstehenden Ansprüche, **dadurch gekennzeichnet, daß** in einer der Öffnungen der Stirnwände (24, 25) eine Begrenzungsleuchte eingesetzt oder zumindest eine Aufnahme hierfür vorgesehen ist.

17. Verriegelung nach mindestens einem der voranstehenden Ansprüche, **dadurch gekennzeichnet, daß** das Gehäuse (21) im Bereich der Öffnungen für Steckzapfen (35) und/oder Drehzapfen (28) Dichtmittel aufweist, insbesondere Dichtringe und/oder Gleitbuchsen.

18. Verriegelung nach einem oder mehreren der voranstehenden Ansprüche, **dadurch gekennzeichnet, daß** am oder im Gehäuse (21) mindestens eine pneumatisch oder hydraulisch wirksame Kolben-Zylinder-Einheit zur Betätigung der Verriegelung angeordnet ist.

19. Verriegelung nach Anspruch 18, **dadurch gekennzeichnet, daß** dem Steckzapfen (35) zur Betätigung desselben eine Kolben-Zylinder-Einheit zugeordnet ist, derart, daß bei Beaufschlagung des Zylinders (63) der Steckzapfen (35) in seiner Längsrichtung zwischen einer Öffnungsstellung und einer Verriegelungsstellung bewegbar ist.

20. Verriegelung nach Anspruch 18 oder 19, **dadurch gekennzeichnet, daß** die Kolben-Zylinder-Einheit getrieblich mit dem Drehzapfen (28) und mit dem Steckzapfen (35) gekoppelt ist.

21. Verriegelung nach Anspruch 18, 19 oder 20, **dadurch gekennzeichnet, daß** dem Drehzapfen (28) eine Außenverzahnung (Zahnradsegment 73) zugeordnet ist, die in eine der Kolben-Zylinder-Einheit zugeordnete Verzahnung (Außenverzahnung 72) eingreift.

## Claims

1. Lock for containers on a vehicle chassis, in particular on a gooseneck chassis, having a housing (21), a plug-in pin (35) which is mounted displaceably in the housing, and a pivot pin (28) which is mounted rotatably in the housing, **characterized in that** the plug-in pin (35) and pivot pin (28) are coupled to each other in transmission terms in such a manner that, when the pivot pin (28) is actuated, the plug-in pin (35) is also displaced, and/or **in that**, when the plug-in pin (35) is actuated, the pivot pin (28) is rotated.

2. Lock according to Claim 1, **characterized in that** the pivot pin (28) has a toothing, in particular a gearwheel segment (47) over approximately 80° to 140°, **in that** the plug-in pin (35) or an extension (38) of the same, which is arranged in the housing (21), has a toothing, in particular in the manner of a rack or lantern toothing (webs 44, 45 and round bars 46), and **in that** the abovementioned toothings intermesh for the purpose of coupling the plug-in pin (35) and pivot pin (28) in transmission terms.

3. Lock according to Claim 1 or 2, **characterized in that** the toothing (47) of the pivot pin (28) is part of a sleeve (48) which is held in a rotationally secure manner on the pivot pin (28), or **in that** the toothing of the pivot pin (28) is part of the same and, in particular in the radial direction, does not protrude over the circumference of the pivot pin (28).

4. Lock according to Claim 2 or 3, **characterized in that** the extension (38) of the plug-in pin (35) is bent at right angles in the lateral direction relative to the latter in such a manner that a continuation of the axis (36) of the plug-in pin (35) approximately intersects the axis (37) of the pivot pin (28) while the extension (38) runs laterally next to the pivot pin (28).

5. Lock according to at least one of Claims 2 to 4, **characterized in that** the extension (38) is guided on a side wall (26) of the housing (21).

6. Lock according to at least one of Claims 2 to 5, **characterized in that** the extension (38) is held displaceably in the longitudinal direction between the pivot pin (28) and side wall (26), in particular in a guide in the manner of a U-profile.

7. Lock according to at least one of Claims 2 to 6, **characterized in that** the side wall (26) of the housing (21) has two webs (limbs 40, 41) which are arranged at a distance from each other and run in horizontal planes situated one above the other and between which the extension (38) is guided with corresponding locating surfaces.

8. Lock according to at least one of the preceding claims, **characterized in that** the plug-in pin (35) or its extension (38) is guided laterally, i.e. on the side facing away from the pivot pin (28), in a sliding manner and preferably with reduced friction, in particular bears in a sliding manner on a plastic strip (sliding plate 43) or a galvanized surface, which plastic strip or surface is preferably connected to a side wall (26) of the housing (21) and extends parallel to the longitudinal direction of the plug-in pin (35).

9. Lock according to at least one of the preceding claims, **characterized in that** the pivot pin (28) has, at a preferably lower end (29) which is guided out of the housing (21), a means for bringing about rotation, in particular a lever (30) which is arranged transversely to the axis of rotation (37) and is connected to the end (29).

10. Lock according to Claim 9, **characterized in that** the lever (30) is of bent design in order to enlarge the distance relative to a lower side (bottom wall 22) of the housing (21).

11. Lock according to at least one of the preceding claims, **characterized in that** the housing (21) is closed on all sides and only has openings for the protrusion of the plug-in pin (35), the pivot pin (28) and, in particular, a lower end (29) of the pivot pin.

12. Lock according to one or more of the preceding claims, **characterized in that** the housing (21) is of largely symmetrical construction for the optional attachment on the left side or right side of the vehicle chassis, having a top wall (23), bottom wall (22), side walls (26) and small end walls (24, 25), having an opening in the top wall (23) and preferably also in the bottom wall (22) for receiving the pivot pin (28), and openings in the end walls (24, 25) for, in particular, optionally guiding out the plug-in pin (35).

13. Lock according to Claim 12, **characterized in that** one of the two openings in the end walls (24, 25) is closed in a sealed manner by means of a cover (60).

14. Lock according to at least one of the preceding claims, **characterized in that** one of the side walls of the housing (21) can be detached for maintenance purposes and/or for installing the individual components of the lock.

15. Lock according to at least one of the preceding claims, **characterized in that** a collar (32) for guiding and holding a container corner fitting is arranged fixedly on the top wall (23) - region of the opening for the pivot pin (28).

16. Lock according to at least one of the preceding claims, **characterized in that** a boundary light is inserted in one of the openings of the end walls (24, 25) or at least one holder for it is provided.

17. Lock according to at least one of the preceding claims, **characterized in that** the housing (21) has sealing means, in particular sealing rings and/or sliding bushings, in the region of the openings for the plug-in pin (35) and/or pivot pin (28).

18. Lock according to one or more of the preceding claims, **characterized in that** at least one pneumatically or hydraulically acting piston/cylinder unit for actuating the lock is arranged on or in the housing (21).

19. Lock according to Claim 18, **characterized in that** a piston/cylinder unit is assigned to the plug-in pin (35), for the purpose of actuation of the same, in such a manner that, when the cylinder (63) is acted upon, the plug-in pin (35) can be moved in its longitudinal direction between an opening position and a locking position.

20. Lock according to Claim 18 or 19, **characterized in that** the piston/cylinder unit is coupled in transmission terms to the pivot pin (28) and to the plug-in pin (35).

21. Lock according to Claim 18, 19 or 20,
**characterized in that** the pivot pin (28) is assigned an external toothing (gearwheel segment 73) which engages in a toothing (external toothing 72) assigned to the piston/cylinder unit.

## Revendications

1. Dispositif de verrouillage pour un conteneur sur le châssis d'un véhicule, en particulier sur un châssis à col de cygne, avec un boîtier (21), un pivot (35) disposé de façon coulissante dans le boîtier et un tenon (28) disposé de façon rotative dans le boîtier, **caractérisé en ce que** le pivot (35) et le tenon (28) sont couplés ensemble par engrenage de telle sorte que lors de l'actionnement du tenon (28), le pivot (35) est également déplacé et/ou que lors de l'actionnement du pivot (35), le tenon (28) est mis en rotation.

2. Dispositif de verrouillage selon la revendication 1, **caractérisé en ce que** le tenon (28) présente une denture, en particulier une partie de roue dentée (47) sur environ 80° à 140°, **en ce que** le pivot (35) et/ou un prolongement (38) de celui-ci disposé dans le boîtier (21) présente une denture, en particulier de type crémaillère ou denture à lanterne (traverses 44, 45 et barres rondes 46), et **en ce que** les dentures mentionnées s'engagent l'une dans l'autre pour l'accouplement par engrenage des pivots (35) et des tenons (28).

3. Dispositif de verrouillage selon la revendication 1 ou 2, **caractérisé en ce que** la denture (47) du tenon (28) est une partie de l'enveloppe (48) qui est maintenue solidement contre la rotation sur le tenon (28), ou que la denture du tenon (28) est une partie de celui-ci, et en particulier ne dépasse pas la circonférence du tenon (28) dans la direction radiale.

4. Dispositif de verrouillage selon la revendication 2 ou 3, **caractérisé en ce que** le prolongement (38) du pivot (35) est recourbé en direction latérale vis-à-vis de celui-ci de telle sorte qu'une prolongation de l'axe (36) du pivot (35) coupe pratiquement l'axe (37) du tenon (28) tandis que le prolongement (38) s'étend latéralement dans le voisinage du tenon (28).

5. Dispositif de verrouillage selon au moins l'une des revendications 2 à 4, **caractérisé en ce que** le prolongement (38) est guidé le long d'une paroi latérale (26) du boîtier (21).

6. Dispositif de verrouillage selon au moins l'une des revendications 2 à 5, **caractérisé en ce que** le prolongement (38) est maintenu de façon mobile dans le sens longitudinal entre le tenon (28) et la paroi latérale (26), en particulier dans un guide dont le profil est en forme de U.

7. Dispositif de verrouillage selon au moins l'une des revendications 2 à 6, **caractérisé en ce que** la paroi latérale (26) du boîtier (21) présente deux traverses (branches 40, 41) qui s'étendent sur des niveaux horizontaux superposés et qui sont disposées à distance l'une de l'autre, entre lesquelles le prolongement (38) muni de surfaces d'appui correspondantes est guidé.

8. Dispositif de verrouillage selon au moins l'une des revendications précédentes, **caractérisé en ce que** le pivot (35) et/ou son prolongement (38) est guidé latéralement, c'est-à-dire coulissant sur le côté opposé au tenon (28) et de préférence avec une friction réduite, en particulier en s'appuyant de façon coulissante à un anneau en plastique (plaque coulissante 43) ou une surface zinguée qui est relié ou reliée de préférence à une paroi latérale (26) du boîtier (21) et s'étend parallèlement à la direction longitudinale du pivot (35).

9. Dispositif de verrouillage selon au moins l'une des revendications précédentes, **caractérisé en ce que** le pivot (28) présente à une extrémité (29), de préférence inférieure, ressortant du boîtier (21), un moyen de rotation, en particulier un levier (30) relié à l'extrémité (29) et disposé en travers de l'axe de rotation (37).

10. Dispositif de verrouillage selon la revendication 9, **caractérisé en ce que** le levier (30) pour accroître la distance par rapport à une face inférieure (paroi de fond 22) du boîtier (21) est de forme coudée.

11. Dispositif de verrouillage selon au moins l'une des revendications précédentes, **caractérisé en ce que** le boîtier (21) est fermé de toute part et présente seulement des ouvertures pour la sortie du pivot (35), du tenon (28) et en particulier d'une extrémité inférieure (29) du tenon.

12. Dispositif de verrouillage selon l'une ou plusieurs des revendications précédentes, **caractérisé en ce que** le boîtier (21) est construit largement symétriquement pour le montage sur le châssis de véhicule au choix sur le côté gauche ou sur le côté droit, avec une paroi supérieure (23), une paroi de fond (22), des parois latérales (26) et de petites parois frontales (24, 25), avec une ouverture dans la paroi supérieure (23) et également dans la paroi de fond (22) pour la réception du tenon (28) et des ouvertures dans les parois frontales (24, 25) pour la sortie en particulier sélective du pivot (35).

13. Dispositif de verrouillage selon la revendication 12, **caractérisé en ce qu'**une des deux ouvertures dans les deux faces frontales (24, 25) sont fermées de façon hermétique par un couvercle (60).

14. Dispositif de verrouillage selon au moins l'une des revendications précédentes, **caractérisé en ce qu'**une des parois latérales du boîtier (21) peut se détacher pour l'entretien et/ou pour le montage des composants isolés du dispositif de verrouillage.

15. Dispositif de verrouillage selon au moins l'une des revendications précédentes, **caractérisé en ce que** sur la paroi supérieure (23) - zone de l'ouverture pour le pivot (28) - est disposé fixement un col (32) pour le guidage et la réception d'une pièce de coin d'un conteneur.

16. Dispositif de verrouillage selon au moins l'une des revendications précédentes, **caractérisé en ce que** dans l'une des ouvertures des faces frontales (24, 25), un feu de position avant est mis en place ou au moins qu'un réceptacle est prévu à cet effet.

17. Dispositif de verrouillage selon au moins l'une des revendications précédentes, **caractérisé en ce que** le boîtier (21) présente dans la zone des ouvertures pour pivot (35) et/ou tenon (28) des joints d'étanchéité, en particulier des bagues d'étanchéité et/ou des bagues flottantes.

18. Dispositif de verrouillage selon l'une ou plusieurs des revendications précédentes, **caractérisé en ce que** sur ou dans le boîtier (21) est disposée au moins une unité piston-cylindre à action hydraulique ou pneumatique pour actionner le dispositif de verrouillage.

19. Dispositif de verrouillage selon la revendication 18, **caractérisé en ce qu'**une unité piston-cylindre est attribuée au pivot (35) pour l'actionnement de celui-ci, de telle sorte que lors de la sollicitation du cylindre (63), le pivot (35) est mobile dans sa direction longitudinale entre une position d'ouverture et une position de verrouillage.

20. Dispositif de verrouillage selon la revendication 18 ou 19, **caractérisé en ce que** l'unité piston-cylindre est couplée par engrenage au tenon (28) et au pivot (35).

21. Dispositif de verrouillage selon la revendication 18, 19 ou 20, **caractérisé en ce qu'**une denture extérieure (partie de roue dentée 73) est attribuée au tenon (28), denture qui s'engrène dans une denture attribuée à l'unité piston-cylindre (denture extérieure 72).
